# EUROPÄISCHE PATENTSCHRIFT

(11) **EP 1 560 884 B1**
(45) Veröffentlichungstag und Bekanntmachung des Hinweises auf die Patenterteilung: **21.06.2006**
(21) Anmeldenummer: 03810931.0
(22) Anmeldetag: 16.09.2003
(51) Int. Cl.: C09C 1/00, B41M 3/14, B42D 15/00, C09D 11/02, C09D 5/36

(54) **DIFFRAKTIVE PIGMENTE**
DIFFRACTIVE PIGMENTS
PIGMENTS DIFFRACTIFS

(30) Priorität: 11.11.2002 DE 10252645
(43) Veröffentlichungstag der Anmeldung: 10.08.2005
(73) Patentinhaber: Bühler AG, 9240 Uzwil (CH)
(72) Erfinder: PILOTEK, Steffen, 9500 Wil (CH); ZIMMERMANN, René, 9523 Züberwangen (CH); MENNIG, Martin, 66287 Quierschied (DE); SCHMIDT, Helmut, 66130 Saarbrücken-Güdingen (DE); OLIVEIRA, Peter-William, 66111 Saarbrücken (DE)
(74) Vertreter: Frommhold, Joachim
(86) Internationale Anmeldenummer: PCT/CH2003/000624
(87) Internationale Veröffentlichungsnummer: WO 2004/044059

(56) Entgegenhaltungen:
- EP-A- 0 952 009
- US-A- 3 957 354
- US-A- 4 434 010
- US-A- 5 912 767
- US-A- 6 068 691
- US-A1- 2003 129 404
- US-B1- 6 168 100
- US-B1- 6 242 510
- US-B1- 6 344 245

## Beschreibung

Die Erfindung bezieht sich auf ein diffraktives, insbesondere ein holografisches Pigment, bzw. ein derartige Pigmente aufweisendes Pigmentpulver sowie auf ein Verfahren zu dessen Herstellung.

Pigmente als farbgebende bzw. farberzeugende Elemente sind in zahlreichen Varianten bekannt. Bei der herkömmlichen Farberzeugung mittels Pigmenten verwendet man einerseits a) die selektive Absorption bestimmter Frequenzen bzw. Wellenlängen in dem Pigmentmaterial durch selektive Anregung von Elektronenübergängen in Atomen und/oder Molekülen des Pigmentmaterials oder durch selektive Anregung von Elektronenschwingungen innerhalb charakteristischer funktioneller Gruppen des Pigmentmaterials. Andererseits b) verwendet man mittels einer regelmässigen Strukturierung des Pigmentmaterials hervorgerufene Laufzeitunterschiede, um Diffraktions- oder Interferenzeffekte zu erzielen.

Anstrichstoffe und Lacke enthalten häufig Farbstoffe oder Pigmente, die durch eine solche Absorption gemäss a) Farbeindrücke vermitteln. Es gibt einen umfangreichen Stand der Technik zur Herstellung unterschiedlicher Pigmente und Farbstoffe durch chemische Synthese. Ihr Vorteil liegt in der Handhabung, so dass die farbgebende Komponente gewünschten Bindemittelsystemen zugegeben werden kann. Zur Verarbeitung von Pigmenten zur Herstellung von Druckfarben oder anderen farbgebenden Formulierungen ist ebenfalls weitreichender Stand der Technik bekannt.

Zur Farberzeugung bzw. zur Bereitstellung farbiger Strukturen gemäss b) verwendet man Interferenzpigmente, Hologramme sowie anderweitige diffraktive und/oder refraktive Pigmente.

Interferenzpigmente sind optische Mehrschichtstrukturen, bei denen der Farbeindruck durch wiederholte Transmission und Reflexion an den Grenzflächen der unterschiedlichen Schichten durch konstruktive und destruktive Interferenz erzeugt wird. Dazu werden in aufwändigen Verfahren Trägermaterialien mit einer Abfolge von optisch hoch- und niedrigbrechenden Materiallen beschichtet, wobei die Schichtdickenkontrolle von grosser Bedeutung ist. Anschliessend werden die Mehrschichtstrukturen zu "Pigmentplättchen" zerkleinert, wobei die Abtrennung vom Trägarmaterial vor oder nach der Zerkleinerung erfolgen kann. Beispiele hierfür sind die US 4 434 010 oder die EP 0 227 423.

Hologramme (vgl, "Holographie-Fibel"; Peter Heiss; ISBN 3-88984-029-9) sind optische Strukturen, die ähnlich wie Interferenzpigmente, aber im Gegensatz zu Pigmenten gemäss a), von der chemischen Beschaffenheit des eigentlichen Pigmentmaterials unabhängig sind. Sie zeigen je nach Betrachtungswinkel und Beleuchtung mitunter einen farbigen Eindruck und können bei richtiger Beleuchtung die vom "holografisch gespeicherten" Objekt ausgehenden dreidimensionalen Objektwellen reproduzieren, so dass ein dreidimensionaler Eindruck entsteht.

Definierte Farben lassen sich auch durch Einsatz diffraktiver Elemente, wie z.B. als Farbfilter wirkende Beugungsgitter erzielen. So sind z.B. aus der US 3 957 354 oder der EP 0 632 296 Llnienmuster bekannt, die bei der Bestrahlung mit Sonnenlicht oder einer anderen polychromatischen Lichtquelle zu bestimmten definierten Farbeindrücken führen.

Einen anderen Ansatz verwendet die DE 19912 160. Zur Herstellung eines farbigen Bildes oder eines Hologramms, die als digital gespeichertes Bild vorliegen, werden auf ein Material mit dauerhaft prägbarer Oberfläche Punkte mit einem maximalen Durchmesser von 1000 µm aufgeprägt, die jeweils ein Muster parallel verlaufender Linien aufweisen, die einen von der zu erzeugenden Farbe abhängigen Abstand im Bereich von 100 nm bis 2000 nm besitzen. Das Aufprägen der Punkte erfolgt durch einen Nadeldrucker, der einen Satz Nadelspitzen für die benötigten Grundfarben ausweist.

Die US 5 912 767 offenbart diffraktive Elemente, die z.B. in optisch variabeln Druckfarben für holografische Abbildungen oder in Klebemitteln verwendet werden können. Jedes Element besteht aus einer dünnen Folie und ist auf einer oder beiden Seiten mit einem diffraktiven Muster geprägt. Die Grösse der Elemente beträgt 30 µm oder weniger, Die diffraktiven Muster bestehen aus Rillen oder geometrisch geformten Vertiefungen. Die diffraktiven Strukturen können in Form von konzentrischen kreisförmigen Mustern oder konzentrischen polygonalen Rillen vorliegen. Jedes einzelne diffraktive Element kann verschiedene Bereiche aufweisen, die jeweils unterschiedliche diffraktive Muster enthalten und je nach Betrachtungswinkel unterschiedliche diffraktive Effekte erzeugen.

Die US 8,168,100 offenbart geprägte metallische Pigmentplättchen, die als holografische Pigmente verwendet werden, Ihre durchschnittliche Grösse liegt im Bereich von 25 bis 50 µm, ihre Dicke im Bereich von 0, 4 bis 1 µm.

Die US 6,068.691 offenbart geprägte plättchenförmige Metallpigmente, die in Druckfarben und In Beschichtungen z.B. in Form von Hologrammen für Sicherheitsdokumente verwendet werden. Die so gebildeten Pigmentplättchen haben eine Grösse von 25 bis 50 µm und eine Dicke von 0,01 bis 0,05 µm. Das Herstellungsverfahren umfasst das Prägen mindestens einer Oberfläche einer Prägeschicht, die anschliessend metallisiert wird, um einen geprägten metallischen Film zu bilden, der anschliessend zu Pigmentplättchen vermahlen wird.

Die EP 0 952 009 offenbart holografische Pigmente mit einer Grösse von 5 bis 50 µm, einer Dicke von 0,3 bis 5 µm und mit einem aufgeprägten Muster. Das Herstellungsverfahren umfasst das Aufbringen einer Farbschicht auf eine geprägte Trägerlatte, das Abziehen des Harzfilmes und das Aufbringen eines dünnen Metallfilms auf die geprägte Harzoberfläche sowie anschliessendes Pulverisieren.

Der Erfindung liegt die Aufgabe zugrunde, hochwertige Drucke mittels vorhandener Druckverfahren auf Pigmentbasis zu ermöglichen, wobei insbesondere das weiter oben genannte Nadel-Druckverfahren z.B. durch ein bekanntes Tintenstrahl-Druckverfahren auf Pigmentbasis ersetzt werden soll.

Diese Aufgabe wird durch ein Pigment gemäss Anspruch 1 bzw. eine Druckfarbe gemäss Anspruch 37 gelöst, die mittels eines Verfahrens gemäss Anspruch 23 hergestellt werden.

Bei dem erfindungsgemässen Pigment ist die kleinste Pigment-Abmessung mindestens ein Vielfaches der grössten Wellenlänge (ca. 400 nm) von ultraviolettem Licht, wobei das Pigment mindestens eine definierte diffraktive Struktur aufweist, deren kleinste räumliche Periodizität eine räumliche Periode hat, die mindestens ein Vielfaches der grössten Wellenlänge (ca. 400 nm) von ultraviolettem Licht ist. Ausserdem weist das Pigment eine innere diffraktive Struktur auf, die von einem epitaktisch aufgetragenen, optisch durchlässigen Versiegelungsmaterial umgeben ist.

Auf diese Weise ist auf dem Pigment ausreichend viel Platz vorhanden, um mehrere parallele Beugungslinien eines Beugungsgitters auf der Pigment-Oberfläche unterzubringen. Vor allem lassen sich dadurch auch einige entlang der kleinsten Abmessung des Pigments beabstandete parallele Beugungslinien unterbringen.

Insbesondere Ist die kleinste Pigment-Abmessung mindestens ein Vielfaches der grössten Wellenlänge (ca. 800 nm) von sichtbarem Licht und weist das Pigment mindestens eine definierte diffraktive Struktur auf, deren räumliche Periodizität eine räumliche Periode hat, die mindestens ein Vielfaches der grössten Wellenlänge (ca, 800 nm) von sichtbarem Licht ist.

Auf diese Welse kann das Pigment sowohl im UV-Bereich als auch im sichtbaren Bereich ein Beugungsmuster erzeugen, wobei das UV-Beugungsmuster z.B. für sicher heitstechnische Anwendungen dient, während das sichtbare Beugungsmuster rein dekorativen Zwecken dient.

Das erfindungsgemässe Pigment hat vorzugsweise eine plättchenartige Form, wobei mindestens eine Plättchenseite eine diffraktive Struktur (ein Beugungsgitter) aufweist.

Dadurch wird beim Drucken gewährleistet, dass das Pigment beim Bedrucken einer Substratfläche stets flach auf der Substratfläche liegt, wodurch alle Pigmente in einer einheitlichen Ebene liegen und eine definierte, ggf. winkelabhängige Farbwirkung zumindest über nicht allzu grosse Flächen erzeugen. Wenn das Beugungsgitter auf beiden Plättchenseiten ausgebildet ist, spielt es keine Rolle, welche Plättchenseite oben oder unten ist.

Vorzugsweise hat das Pigment eine sich über das gesamte Pigment erstreckende periodische diffraktive Struktur mit einer bestimmten räumlichen Frequenz und räumlichen Ausrichtung. Auf diese Weise kann ein ganz bestimmter, spektral reiner Farbeindruck gewonnen werden. So kann z.B. ein ganzer Satz von Grundfarben zur additiven (subjektiven) Farbmischung bereitgestellt werden. Da diese diffraktiven Pigmente beim Drucken innerhalb der durch eine ebene Substratfläche definierten Ebene beliebig ausgerichtet sein können, wird dennoch gewährleistet, dass ausreichend viele der Pigmente aus der "richtigen Richtung", d.h. z.B. senkrecht zur Ausrichtung paralleler Beugungslinien betrachtet werden. Im statistischen Mittel wird somit stets etwa die Hälfte des "Farbpotentials" genutzt, das zustande käme, falls es möglich wäre, alle Pigmente mit einer Sorte paralleler Beugungslinien innerhalb der definierten Ebene gleich auszurichten, die man dann senkrecht zur Richtung der Beugungslinien betrachten würde.

Alternativ kann das Pigment verschiedene Bereiche mit jeweils unterschiedlicher periodischer diffraktiver Struktur aufweisen. So können z.B. auf ein und demselben Pigment sowohl zueinander parallele Beugungslinien in einer ersten Richtung als auch zueinander parallele Beugungslinien in einer zweiten Richtung vorhanden sein, wobei die beiden Richtungen vorzugsweise senkrecht zueinander verlaufen. Dies gewährleistet, dass jedes der beliebig ausgerichteten Pigmente stets aus der "richtigen Richtung", d.h. z.B. immer mit einer Komponente senkrecht zur Ausrichtung paralleler Beugungslinien betrachtet wird. Auch hier wird dann im statistischen Mittel stets etwa die Hälfte des "Farbpotentials" genutzt, das zustande käme, falls es möglich wäre, alle Pigmente mit nur einer Sorte paralleler Beugungslinien (vorheriger Absatz) innerhalb der definierten Ebene gleich auszurichten und dann senkrecht zur Richtung der Beugungslinien zu betrachten.

Zweckmässigerweise weisen die einzelnen Pigmente rotationssymmetrische oder polygonförmige Beugungsgitter auf, die aus konzentrischen kreisförmigen bzw. polygonförmigen Beugungslinien bestehen. Dies bewirkt ebenfalls einen praktisch richtungsunabhängigen Farbeindruck, wie im vorherigen Absatz erläutert.

Die verschiedenen Bereiche mit jeweils unterschiedlicher periodischer diffraktiver Struktur können sich in der räumlichen Frequenz und/oder in der räumlichen Ausrichtung der periodischen Struktur des jeweiligen Bereichs unterscheiden. Dies ermöglicht Pigmente mit überlagerten Farbwirkungen im sichtbaren Bereich, aber auch mit diffraktiver Wirkung im angrenzenden ultravioletten oder infraroten Bereich. Insbesondere weist das Pigment eine diffraktive Struktur für ultraviolettes Licht und eine diffraktive Struktur für sichtbares Licht auf. Ein derartiges Pigment erscheint einerseits im sichtbaren Bereich farbig und kann andererseits bei Bestrahlung mit einer geeigneten UV-Quelle und Sichtbarmachung seiner "UV-Farbe" (z.B. UV-fluoreszierender Schirm) auf seine Authentizität geprüft werden. Es eignet sich daher besonders gut zur Authentisierung von Dokumenten, indem diese mit derartigen Pigmenten bedruckt werden.

Das erfindungsgemässe Pigment besitzt zweckmässigerweise eine sich über das gesamte Pigment erstreckende periodische diffraktive Struktur, die eine Überlagerung verschiedener bestimmter räumlicher Frequenzen und räumlicher Ausrichtungen ist. Dadurch entstehen z.B. Pigmente mit winkelabhängiger Farbwirkung, deren Farbeindruck für den Betrachter von dem Winkel zwischen der Blickrichtung des Betrachters und der Pigmentebene abhängig ist (Pigmentplättchen).

Das erfindungsgemässe Pigment kann auch ein Ausschnitt aus einem Hologramm sein.

Gemäss einer besonders vorteilhaften Ausführung besteht das erfindungsgemässe Pigment aus einem optisch durchlässigen Material, wobei die definierte diffraktive Struktur durch eine definierte räumliche Verteilung der Pigmentdicke d(x,y) und/oder des Brechungsindexes n(x,y) des Pigmentmaterials gegeben ist. Die diffraktive Struktur ist dann durch die so modulierte optische Weglänge s(x,y) = n(x,y)·d(x,y) gegeben. Derartige Transmissions-Pigmente sind in beiden Durchstrahlungsrichtungen "farbig".

Gemäss einer weiteren vorteilhaften Ausführung enthält das Pigment ein optisch durchlässiges Material, in dessem Innern eine reflektierende Schicht angeordnet ist. Auch derartige Reflexions-Pigmente sind auf beiden Seiten "farbig". Zweckmässigerweise ist die definierte diffraktive Struktur eine definierte räumliche Verteilung von Erhebungen und Vertiefungen Δh(x,y) einer reflektierenden Oberflächenschicht des Pigments, die erfindungsgemäss von einem optisch durchlässigen Versiegelungsmaterial mit Brechungsindex n(x,y) umgeben ist, so dass auch hier wieder die diffraktive Struktur durch die so modulierte optische Weglänge s(x,y) = 2n(x,y)·Δh(x,y) gegeben ist.

Die Abmessungen des erfindungsgemässen Pigments liegen im Bereich zwischen 5 µm und 200 µm und insbesondere im Bereich zwischen 10 µm und 30 µm, wobei insbesondere seine Länge und seine Breite im Bereich zwischen 5 µm und 200 µm und Insbesondere im Bereich zwischen 10 µm und 30 µm liegen. Dies ermöglicht die für eine nennenswerte Farbintensität und den nötigen Kontrast zwischen Maxima und Minima des Beugungsspektrums notwendige Unterbringung einer ausreichend grossen Zahl periodisch angeordneter Beugungslinien auf dem Pigment. Die Verwendung sehr grosser diffraktiver Pigmente wäre bei Bestrahlung mit monochromatischem Laserlicht (z.B. Laserdiode) sicherlich vorteilhaft, da dieses eine sehr hohe Kohärenz aufweist und somit sehr intensive Leuchterscheinungen hervorrufen würde. In der Praxis ist es aber besonders wichtig, auch mit herkömmlichen Lichtquellen, wie z.B. der Sonne oder alltäglichen Lampen (z.B. leuchtdiode), arbeiten zu können, deren Licht eine nur geringe Kohärenzlänge aufweist. Um hier bei Bestrahlung mit wenig kohärentem Licht über die volle Pigmentfläche kohärente Wellenfronten des einfallenden Lichts zu gewährleisten, dürfen die Pigmente ohnehin eine bestimmte Mindestfläche nicht überschreiten.

Die Dicke des erfindungsgemässen Pigments kann im Bereich zwischen 0,1 µm und 10 µm und insbesondere im Bereich zwischen 0,5 µm und 5 µm liegen. Das reicht für die Ausbildung von ca, 100 nm bis 200 nm tiefen Stufen in der diffraktiven Struktur aus.

Es kann auch aus mindestens zwei übereinander liegenden Schichten aufgebaut sein, um zusätzlich noch Mehrschicht-Interfrerenz-Effekte zu nutzen. Vorzugsweise hat es auf beiden Plättchenflächen eine definierte diffraktive Oberflächenstruktur und ist damit ähnlich wie die weiter oben beschriebenen Pigmente ebenfalls auf beiden Seiten "farbig".

Zweckmässigerwelse besteht die Versiegelung aus einem hydrophoben oder hydrophilen Material. Sie dient als Phasenvermittler für die Dispersion der erfindungsgemässen Pigmente in einem hydrophoben bzw. hydrophilen Bindemittel.

Für spezielle Anwendungen ist es vorteilhaft, wenn die Versiegelung des erfindungsgemässen Pigment-Plättchens auf der ersten Plättchenfläche aus einem hydrophoben Material und auf der zweiten Plättchenfläche aus einem hydrophilen Material besteht. Derartige Pigmentplättchen reichem sich in mehrphasigen Flüssigkeiten an der oder den Phasengrenzen an, wobei im Phasengleichgewicht die hydrophilen Plättchenflächen der hydrophileren Phase zugewandt sind und die hydrophoben Plättchenflächen der hydrophoberen Phase zugewandt sind.

Das erfindungsgemässe Verfahren zur Herstellung von Pigmenten der weiter oben beschriebenen Art weist die folgenden Schritte auf:
a) Prägen einer definierten diffraktiven Struktur in/oder auf einem folienartigen Träger;
b) Beschichten der definierten diffraktiven Struktur auf dem Träger mit einem Versiegelungsmittel durch Epitaxie;
c) Vermahlung des in Schritt a) und b) bearbeiteten folienartigen Trägers zu Pigmentpartikeln.

Der Schritt a) kann dabei durch Heissprägen, Thixoprägen (gemäss DE 100 01 135 A1 des Institutes für neue Materialien INM, Saarbrücken) oder Reaktivprägen, durch Lithographie, insbesondere durch Elektronenstrahl- oder optische Lithographie, oder aber durch Ritzen der Oberfläche des Trägers erfolgen.

In Schritt b) kann die diffraktive Struktur mit einer reflektierenden Schicht belegt werden. Der Schritt b) kann durch Gasphasen- oder Flüssigphasen-Epitaxie, oder durch Bedampfen, insbesondere mit einem Metalldampf, erfolgen.

In Schritt c) kann auch ein Zerschnipseln des folienartigen Trägers erfolgen, um die angestrebten erfindungsgemässen Pigment-Plättchen zu erhalten. Alternativ kann der strukturierte Mehrschichtenaufbau zunächst vom Träger abgelöst und dann zerkleinert werden.

Insbesondere dann, wenn der in Schritt a) verwendete folienartige Träger eine relativ elastische biegsame Basisschicht als erste Schicht aufweist, auf der eine relativ spröde zweite Schicht aufgebracht ist, in und/oder auf der die definierte diffraktive Struktur erzeugt wird, erfolgt in Schritt c) ein Abkanten des folienartigen Trägers, um die angestrebten erfindungsgemässen Pigment-Plättchen zu erhalten. Um das Zerbrechen der relativ spröden zweiten Schicht (Trägerschicht) zu erleichtern und örtlich zu steuern, können mit der Prägung der definierten diffraktiven Struktur zusätzlich Sollbruchstellen geprägt werden, die z.B. ein rotationssymmetrisches oder polygonförmiges Beugungsgitter begrenzen.

Wenn das in Schritt b) verwendete Versiegelungsmaterial ein sprödes, insbesondere lackartiges oder harzartiges Material ist, kann der Schritt c) durch eine klassische Vermahlung erfolgen, wobei eine Nassvermahlung im wässrigen Medium, z.B. mittels einer Rührwerkskugelmühle, besonders vorteilhaft ist. Vorzugsweise werden dabei Mahlhilfskörper (z.B. Kunststoff-"Mahlkügelchen") verwendet, deren Härte geringer als die des Versiegelungsmaterials der Pigmente ist. Dadurch wird verhindert, dass die Pigmente beim Mahlen zerkratzt werden.

Ein erfindungsgemässes Pigmentpulver weist die oben beschriebenen und gemäss dem erfindungsgemässen Verfahren hergestellten Pigmente auf. Sie können mit einem Hilfsmittel, insbesondere einem Benetzungsmittel, beschichtet sein.

Eine erfindungsgemässe Druckfarbe enthält das erfindungsgemässe Pigmentpulver als Dispersion in einem Bindemittel.

Ein erfindungsgemässer Lack enthält das dispergierte erfindungsgemässe Pigmentpulver.

Ein erfindungsgemässer transparenter Kunststoff, insbesondere PET, PEN, PBT, PA, PC, enthält das erfindungsgemässe Pigmentpulver.

Ein erfindungsgemässes Dokument weist zu seiner Authentisierung mindestens eines der folgenden Merkmale auf:
➢ einen aufgedruckten Aufdruck aus der erfindungsgemässen Druckfarbe bzw. Tinte;
➢ ein Etikett aus dem erfindungsgemässen transparenten Kunststoff.

Die vorliegende Erfindung stellt somit diffraktive bzw. holografische Pigmente als eine neue Art von farbgebenden Stoffen sowie deren Herstellung und Formulierungen bereit. Die Verwendung derartiger diffraktiver bzw. holografischer Strukturen innerhalb eines Pigments zur Erzeugung eines Farbeindrucks ist interessant wegen des neuartigen optischen Eindrucks, der optisch anspruchsvolle Drucke ermöglicht. Des weiteren eignen sich die erfindungsgemässen Pigmente für sicherheitstechnische Anwendungen. Solche Pigmente sind aufgrund ihres Herstellungsprozesses und ihrer optischen Eigenschaften gerade für Sicherheitsanwendungen prädestiniert.

Ein besonders vorteilhaftes erfindungsgemässes Verfahren für sicherheitstechnische Anwendungen verwendet die folgenden Schritte:
➢ Erzeugen einer speziellen (authentisierenden) holografischen Struktur auf einem Träger (z.B. aus einem durchsichtigen Material, insbesondere Harz etc.);
➢ Bedampfen mit reflektierendem Material (z.B. Aluminium);
➢ erneutes Beschichten der Struktur (z.B. mit dem o.g. durchsichtigen Material);
➢ Ablösen der so gewonnenen Struktur vom Träger; und
➢ Zerkleinern der abgelösten Struktur und Verwenden der Struktur-Partikel als Pigmente.

Die so gewonnenen holografischen Pigmente enthalten jeweils eine reflektierende Schicht z.B. aus Aluminium, welche die holografische Struktur gespeichert hat und die beiderseits mit dem o.g. durchsichtigen Material beschichtet ("versiegelt") ist. Diese Pigmente können in unterschiedliche Bindemittelsysteme gegeben und als Druckfarbe, Tinte oder Lack verwendet werden.

Erfindungsgemäss sind reine "UV-Pigmente" sowie UV+Visible-Pigmente (Kombipigmente) möglich, die mit üblichen UV-sensiblen Hilfsmitteln zur Sichtbarmachung von UV-Licht betrachtet werden können.

Die erfindungsgemässe Forderung "mindestens eines Vielfachen" der Wellenlänge von sichtbarem Licht (ca. 400 nm bis 800 nm in der Luft) für die minimale Pigment-Abmessung (ausser der Pigment-Dicke) bedeutet "mindestens das Doppelte", was einem "Doppelspalt" entspricht, um irgendwelche sichtbare Interferenz-Farbeffekte oder für das blosse Auge nicht sichtbare UV-Interferenzen zu erhalten. Bevorzugt sind natürlich mehrere (z.B. 3 bis 20), was aber sowieso mit der minimalen Pigmentabmessung korreliert. Wie schon weiter oben erwähnt, ist es aber nicht erforderlich, sehr grosse Pigmente zu haben, da bei Beleuchtung mit "inkohärentem Licht" bzw. "wenig kohärentem Licht" mit kurzen Wellenzügen, wie Sonnenlicht, Glühlampe, Gasentladungslampe, Leuchtdiode, etc., über die gesamte derart grosse Fläche eines jeweiligen Pigments ohnehin keine vollständig kohärente "Ausleuchtung" stattfindet, es sei denn, die Wellenfronten haben dieselbe oder eine sehr ähnliche Form wie die diffraktiven Pigment-Oberflächen und sind zu diesen tangential angeordnet, wenn sie auf die diffraktive Pigment-Oberfläche auftreffen. Dies ist aber unwahrscheinlich.

Mit anderen Worten ist es somit besonders vorteilhaft, wenn die Zerkleinerung der holografischen Struktur bis auf wenige Mikrometer erfolgt, was gleichbedeutend damit ist, dass für eine jeweilige gegebene Wellenlänge nur wenige Beugungslinien auf jedem erfindungsgemässen Pigment vorhanden sind.

Weitere Vorteile, Merkmale und Anwendungsmöglichkeiten der Erfindung ergeben sich aus der nun folgenden Beschreibung einer bevorzugten Ausführung der erfindungsgemässen Pigmente und des erfindungsgemässen Verfahrens, wobei
- Fig. 1: eine schematische Schnittansicht durch ein erfindungsgemässes Pigment ist; und
- Fig. 2A bis 2E: Schnittansichten von dem erfindungsgemässen Pigment sind, welche die schrittweise Herstellung des Pigments der Fig. 1 mittels eines erfindungsgemässen Verfahrens schematisch zeigen;
- Fig. 3A bis 3D: Draufsichten von dem erfindungsgemässen Pigment sind, welche verschiedene definierte Beugungslinien-Geometrien und verschiedene definierte Pigmentformen zeigen; und
- Fig. 4A bis 4C: Draufsichten von dem erfindungsgemässen Pigment sind, welche verschiedene definierte Beugungslinien-Geometrien und verschiedene nicht-definierte Pigmentformen zeigen.

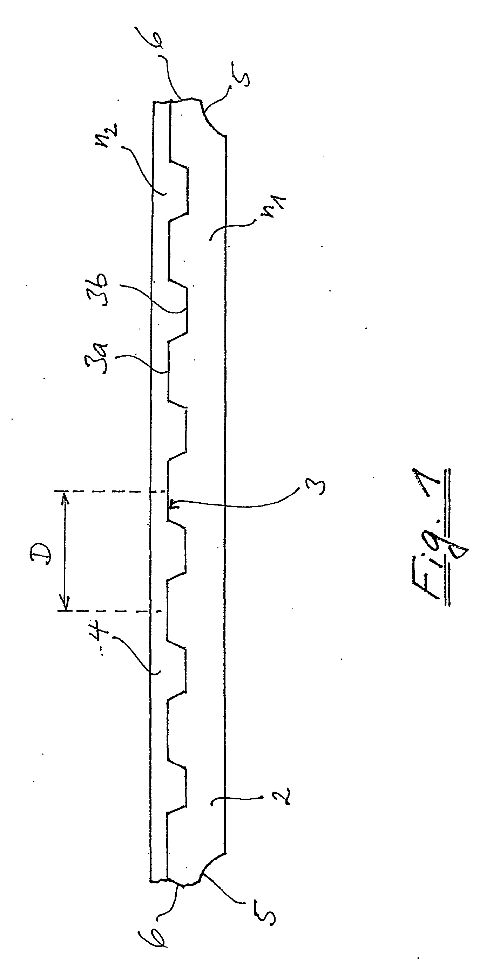

Fig.1 ist eine schematische Schnittansicht durch ein erfindungsgemässes plättchenförmiges Pigment senkrecht zur Plättchenebene. Das Pigmentplättchen hat eine Grösse, deren grösste diagonale Abmessung etwa 10 bis 30 µm beträgt. Das Pigmentplättchen besteht aus einer transparenten Trägerschicht 2 mit einem Brechungsindex n₁ und einer transparenten Versiegelungsschicht 4 mit einem Brechungsindex n₂. Die Grenzfläche 3 zwischen dem Material der Trägerschicht 2 und dem Material der Versiegelungsschicht 4 ist als diffraktive Struktur (Beugungsgitter) ausgebildet, die periodisch abwechselnde Erhöhungen 3a und Vertiefungen 3b aufweist. Die diffraktive Struktur des Pigmentplättchens der Fig.1 ist eine Abfolge zueinander parallel angeordneter Paare aus Erhöhungen 3a und Vertiefungen 3b, die sich senkrecht zur Zeichenebene erstrecken. Das in der Zeichnung linke und rechte Ende des Pigmentplättchens wird durch eine Bruchstelle 6 gebildet, deren Ort durch eine in Form einer Einkerbung 5 vorliegenden Sollbruchstelle 5 jeweils bestimmt ist.

Die Gitterkonstante D der diffraktiven Struktur 3 beträgt hier z.B. 2 µm, während die durch die zwei Sollbruchstellen 5 definierte Dimension senkrecht zu den Beugungslinien 3a, 3b, hier etwa 13 µm beträgt.

Wenn nun das Pigmentplättchen der Fig. 1 mit elektromagnetischer Strahlung 10 im nahen Infrarotbereich (etwa 1 µm), im sichtbaren Bereich (etwa 400 nm bis 800 nm) oder im nahen ultravioletten Bereich (kleiner als 400 nm) bestrahlt wird, so entstehen sowohl in der reflektierten elektromagnetischen Strahlung 11 als auch in der transmittierten elektromagnetischen Strahlung 12 Beugungsmuster mit konstruktiver Interferenz in ausgewählten räumlichen Richtungen für ausgewählte Frequenzen bzw. Wellenlängen der einfallenden elektromagnetischen Strahlung 10. Der Beobachter kann dies zumindest für optische Frequenzen bzw. Wellenlängen als von dem Betrachtungswinkel (Winkel zwischen Blickrichtung und Pigmentebene) des Pigments abhängigen Farbeindruck wahrnehmen. Für die Bestrahlung im UV- Bereich und im IR-Bereich müssten entsprechende Sensoren (z.B. UV-Kamera bzw. IR-Kamera) oder Sichthilfsmittel (UV-Brille, IR-Brille) verwendet werden, um die verschiedenen "Farben" im UV-Bereich und im IR-Bereich sichtbar zu machen. Somit können die erfindungsgemässen Pigmentplättchen sowohl farbgebend im sichtbaren Bereich des optischen Spektrums für dekorative Zwecke als auch für Sicherheitsanwendungen (Authentisierung) verwendet werden, die für das blosse Auge des Betrachters nicht sichtbar sind, aber durch entsprechende UV-Quellen oder IR-Quellen und entsprechende Detektoren, Kameras etc. zur Überprüfung der Authentizität eines mit den erfindungsgemässen Pigmenten versehenen Gegenstands herangezogen werden können.

An der Grenzfläche 3 wird aufgrund der Differenz der Brechungsindices n₁ und n₂ der Trägerschicht 2 bzw. der Versiegelungsschicht 4 ein Teil der einfallenden elektromagnetischen Strahlung 10 als ein erster Teil 11 reflektiert und als ein zweiter Teil 12 transmittiert. Die Reflektivität bzw. Transmissivität der Grenzfläche 3 kann durch den Wert der Brechungsindices n₁ und n₂ eingestellt werden. Des weiteren können die Reflektivität und die Transmissivität durch eine Metallschicht in der Grenzfläche 3 zwischen der Trägerschicht 2 und der Versiegelungsschicht 4 eingestellt werden. Eine sehr dünne Metallschicht im Bereich der Grenzfläche 3 ist für elektromagnetische Strahlung halb-durchlässig, so dass das erfindungsgemässe Pigmentplättchen sowohl reflektierend als auch transmittierend wirkt. Dies hat den Vorteil, dass die Pigmentplättchen sowohl als Druckpigment auf Oberflächen als auch als farbgebendes Pigment im Innern durchsichtiger Körper verwendet werden können. Eine ausreichend dicke Metallschicht in der Grenzfläche 3 (mehrere Atomlagen) bewirkt hingegen, dass das erfindungsgemässe Pigmentplättchen lediglich reflektierend wirkt, wodurch jedoch eine höhere Intensität des Beugungsmusters in der reflektierten elektromagnetischen Welle entsteht.

Die Tiefe der rillenartigen Vertiefungen 3b beträgt etwa 100 nm bis 300 nm, kann jedoch auch darüber liegen.

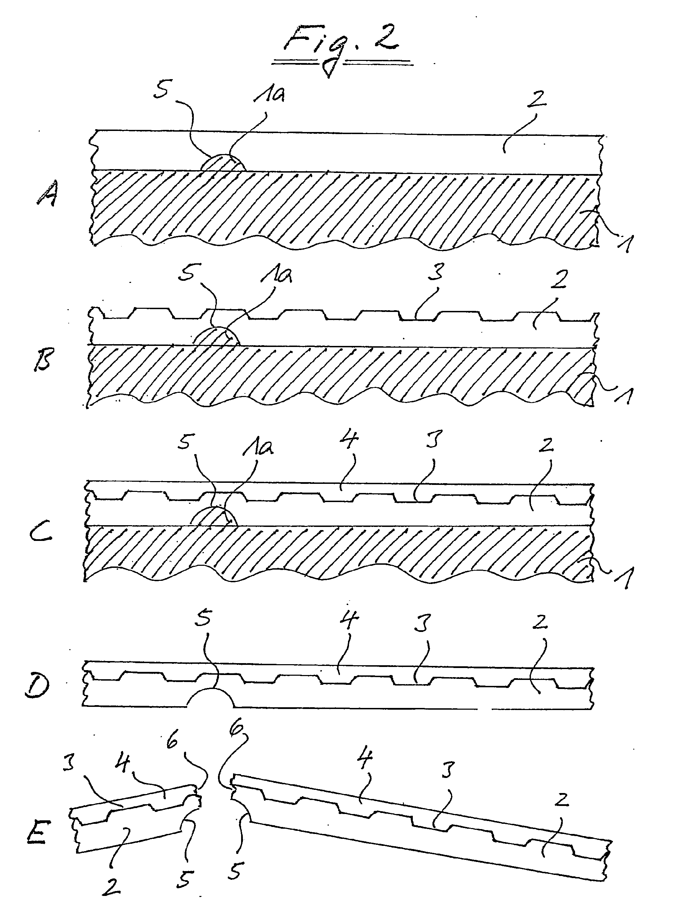

Fig. 2A, 2B, 2C, 2D und zeigen Schnittansichten durch einen Folienabschnitt der im wesentlichen dem Pigmentplättchen der Fig.1 entspricht, wobei die Abfolge der Schnittansichten die schrittweise Herstellung des Pigmentplättchens der Fig. 1 mittels eines erfindungsgemässen Verfahrens schematisch zeigt.

Fig. 2A zeigt den Ausgangszustand, wobei man mit einer zweischichtigen Folie 1, 2 beginnt, bei der eine relativ dicke Basisschicht 1 (deren Dicke nur teilweise dargestellt ist) mit einer dünnen Trägerschicht 2 mit Brechungsindex n₁ beschichtet ist. Die Basisschicht 1 weist an ihrer Oberfläche in bestimmten Abständen wulstartige Erhebungen 1a auf, so dass die auf die Basisschicht 1 aufgetragene Trägerschicht 2 an den Stellen der wulstartigen Erhebungen 1a dünner ist, wodurch eine Sollbruchstelle 5 an der Trägerschicht 2 vorhanden ist.

Fig. 2B zeigt den nächsten Schritt, bei dem auf die Trägerschicht eine definierte diffraktive Struktur 3 aufgeprägt wird. Abgesehen davon, dass die Trägerschicht 2 transparent sein sollte, ist man bei der Wahl des Materials der Trägerschicht 2 relativ frei. Daher kann die diffraktive Struktur bzw. das Beugungsgitter 3 je nach Bedarf z.B. durch Heissprägen, Thixoprägen oder Reaktivprägen erzeugt werden.

Fig. 2C zeigt den nächsten Schritt des erfindungsgemässen Verfahrens, bei dem die im vorhergehenden Schritt erzeugte definierte diffraktierte Struktur 3 der Trägerschicht 2 mit einer Versiegelungsschicht 4 überzogen wird. Abgesehen davon, dass auch die Versiegelungsschicht 4 transparent sein sollte, ist man auch hier bei der Wahl des Materials relativ frei. Die optischen Reflexionseigenschaften und Transmissionseigenschaften der Grenzflächenschicht 3 der diffraktiven Struktur werden einerseits durch die Wahl der Brechungsindices n₁ und n₂ der Trägerschicht 2 bzw. der Versiegelungsschicht 4 und andererseits durch das Bereitstellen einer mehr oder weniger dicken metallischen Schicht (nicht gezeigt) in Schritt B beeinflusst.

Fig. 2D zeigt einen weiteren Schritt, bei dem die Basisschicht 1 von der Trägerschicht 2 abgelöst bzw. vollständig aufgelöst wurde. Das Ablösen bzw. Auflösen der Trägerschicht 2 kann durch ein geeignetes Lösungsmittel und/oder durch mechanische Beanspruchung der Grenzfläche zwischen der Basisschicht 1 und der Trägerschicht 2 bewegt werden. An der Stelle der wulstartigen Erhebungen 1 a der nun entfernten Basisschicht 1 liegt nun eine Sollbruchstelle in Form einer Einkerbung 5 vor. Die so gebildete Pigmentfolie besitzt nun die optischen Eigenschaften der angestrebten Pigmente. Die Trägerschicht 2 ist von Sollbruchstellen 5 durchzogen, an denen bei einer mechanischen Beanspruchung der Pigmentfolie das Entstehen einer Bruchstelle zu erwarten ist.

Fig. 2E zeigt einen weiteren Schritt zur Zerkleinerung der Pigmentfolie von Fig. 2D, wodurch Pigmentplättchen gewonnen werden. Dabei entstehen im Bereich der Sollbruchstellen 5 die jeweiligen Bruchstellen 6 der erzeugten Pigmentplättchen. Die Grobzerkleinerung der Pigmentfolie von Fig. 2D kann z.B. durch Knicken erfolgen, wobei die so gewonnenen grossen Bruchstücke in eine herkömmliche Zerkleinerungsvorrichtung gefüllt werden können. Für die Zerkleinerung der Pigmentplättchen kann man sowohl auf ein Nassmahlverfahren als auch auf ein Trockenmahlverfahren zurückgreifen. Geeignet sind z.B. Schlag- oder Prallmühlen (Trockenmahlverfahren) oder Rührwerkskugelmühlen (Nassmahlverfahren). Als Mahlhilfskörper (Mahlkugeln) in einer Rührwerkskugelmühle werden hier vorzugsweise Mahlkörper mit gleicher oder geringerer Härte als die Trägerschicht 2 oder die Versiegelungsschicht 4 verwendet. Dies gewährleistet, dass die Oberflächen der Trägerschicht 2 und der Versiegelungsschicht 4 nicht zerkratzt werden, so dass einer Beeinträchtigung der Farbintensität der Pigmentplättchen vorgebeugt wird.

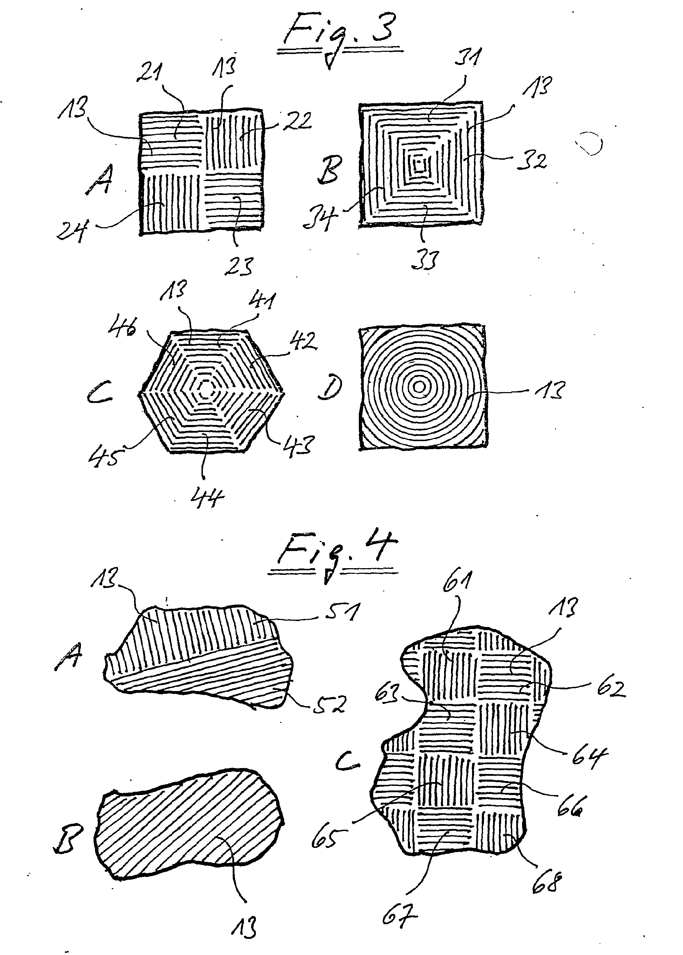

Fig. 3A, 3B, 3C, 3D sind schematische Draufsichten erfindungsgemässer Pigmentplättchen. Obwohl sie jeweils eine andere Form haben, die durch die Anordnung der Sollbruchstellen 5 in der Trägerschicht 2 bestimmt wird (siehe Fig. 1 und Fig. 2), haben alle der hier gezeigten vier Beispiele die gemeinsame Eigenschaft, dass sie verschiedene Bereiche mit unterschiedlich ausgerichteten Beugungslinien aufweisen. So besitzen die quadratischen Pigmentplättchen von Fig. 3A und Fig. 3B jeweils vier Bereiche 21, 22, 23, 24 bzw. 31, 32, 33, 34, deren Beugungslinien 13 jeweils so ausrichtet sind, dass die Ausrichtungen der Beugungslinien 13 benachbarter Bereiche jeweils senkrecht zueinander sind. Das Pigmentplättchen der Fig. 3C besitzt die Form eines Sechsecks, das sechs Bereiche 41, 42, 43, 44, 45, 46 aufweist, in denen die Beugungslinien 13 jeweils so ausgerichtet sind, dass sie mit den Beugungslinien 13 eines benachbarten Bereichs einen Winkel von 120 Grad einschliessen. Das Pigmentplättchen der Fig. 3D besitzt wie die Pigmentplättchen der Fig. 3A und Fig. 3B eine quadratische Form, hat jedoch ein kreissymmetrisches Muster aus kreisförmigen zueinander konzentrisch angeordneten Beugungslinien 13.

Die Anordnung von zueinander ausgerichteten Beugungslinien mit jeweils verschiedenen Ausrichtungen in verschiedenen Bereichen des Pigmentplättchens macht den durch die Interferenz des gebeugten Lichtes entstehenden Farbeindruck im Beugungsspektrum von der jeweiligen Anordnung innerhalb der mit den Pigmentplättchen beschichteten Oberfläche eines Gegenstands unabhängig.

Während die in Fig. 1 und Fig. 2 dargestellten Sollbruchstellen 5 in der Regel mit der diffraktiven Struktur 3 nicht korrelieren, da ihre Prägung auf der Basisschicht 1 unabhängig von der Prägung der diffraktiven Struktur 3 auf der Trägerschicht 2 erfolgt, wird bei den Pigmentplättchen der Fig. 3A, 3B, 3C und 3D dafür gesorgt, dass eine solche Korrelation vorliegt. Dies kann dadurch erreicht werden, dass die Sollbruchstellen 5 gemeinsam mit der diffraktiven Struktur mittels eines Prägewerkzeuges hergestellt werden, das sowohl die diffraktive Struktur als auch die wulstartigen Erhebungen als komplementäre Elemente für die Sollbruchstellen 5 aufweist.

Fig. 4A, 4B, 4C sind Draufsichten von schematischen Pigmentplättchen die eine nicht-definierte Pigmentform haben. Sie entstehen z.B. durch weiteres Zerkleinern vorab entlang von Sollbruchstellen zerkleinerter Pigmentplättchen (vgl. Fig. 3) z.B. mittels eines Mahlverfahrens. Je nach der Grösse der Pigmentplättchen und der Grösse der Bereiche mit unterschiedlich ausgerichteten Beugungslinien 13 erhält man Pigmentplättchen mit mehr oder weniger vielen verschiedenen Bereichen mit einer jeweiligen Ausrichtung der Beugungslinien 13. So besitzt z.B. das Pigmentplättchen der Fig. 4A die beiden Bereiche 51 und 52 mit zueinander senkrechter Ausrichtung der Beugungslinien 13, das Pigmentplättchen der Fig. 4B nur eine einzige Ausrichtung der Beugungslinien 13 und das Pigmentplättchen der Fig. 4C ungefähr acht Bereiche 61, 62, 63, 64, 65, 66, 67, 68 eines Musters aus Beugungslinien 13, bei dem die Beugungslinien benachbarter Bereiche jeweils senkrecht zueinander angeordnet sind.

Aufgrund der gleichmässigen statistischen Verteilung der Anordnung einer grossen Anzahl von Pigmentplättchen innerhalb einer Oberfläche eines mit Pigmenten versehenen Gegenstands entsteht auf ähnliche Weise wie durch die verschiedenen Bereiche innerhalb eines Pigmentplättchens eine Vergleichmässigung des optischen Farbeindrucks ("Anisotropie") der pigmentierten Oberfläche eines Gegenstands. Bei grossflächiger Bedeckung eines Gegenstands mit nur einer Pigmentsorte kann diese Vergleichmässigung ausgenützt werden. Bei kleinflächiger bis punktförmiger Bedeckung mit nur wenigen Pigmenten einer Sorte zur Erzeugung von Bildstrukturen mit hoher Auflösung sind hingegen die Pigmentplättchen von Fig. 4A oder Fig. 4C mit mehreren Beugungslinien-Bereichen vorteilhaft.

Die erfindungsgemässen Pigmente können auch mehrere Arten der Farbgebung kombinieren. So können z.B. Pigmente aus selektiv absorbierenden Molekülen und/oder mit mehrschichtiger Struktur (Interferenzpigmente) für die Farberzeugung in Frage kommen, bei denen eine zusätzliche diffraktive Struktur ausgebildet ist, die für eine nichtsichtbare Authentisierung im UV- oder IR-Bereich verwendet wird.

### Bezugszeichen

- 1: Basisschicht
- 2: Trägerschicht
- 3: diffraktive Struktur/ Grenzfläche / Beugungsgitter
- 4: Versiegelungsschicht
- 5: Einkerbung/Sollbruchstelle
- 6: Bruchstelle
- 1a: wulstartige Erhebung
- 3a: Erhöhung
- 3d: Vertiefung
- 10: einfallende elektromagnetische Strahlung
- 11: reflektierte elektromagnetische Strahlung
- 12: transmitierte elektromagnetische Strahlung
- 21 bis 24: Bereiche des Beugungslinien-Musters
- 31 bis 34: Bereiche des Beugungslinien-Musters
- 41 bis 46: Bereiche des Beugungslinien-Musters
- 13: Beugungslinie

## Patentansprüche

1. Pigment mit mindestens einem Oberflächenbereich, dessen kleinste Abmessung mindestens ein Vielfaches der grössten Wellenlänge (ca. 400 nm) von ultraviolettem Licht ist, wobei das Pigment auf dem mindestens einen Oberflächenbereich eine definierte diffraktive Struktur aufweist, die eine räumliche Periodizität mit einer räumlichen Periode hat, die mindestens ein Vielfaches der grössten Wellenlänge (ca. 400 nm) von ultraviolettem Licht ist, **dadurch gekennzeichnet, dass** das Pigment eine innere diffraktive Struktur aufweist, die von einem epitaktisch aufgetragenen optisch durchlässigen Versiegelungsmaterial umgeben ist.

2. Pigment nach Anspruch 1, **dadurch gekennzeichnet, dass** die kleinste Abmessung des Oberflächenbereichs mindestens ein Vielfaches der grössten Wellenlänge (ca. 800 nm) von sichtbarem Licht ist und das Pigment auf dem mindestens einen Oberflächenbereich mindestens eine definierte diffraktive Struktur aufweist, die eine räumliche Periodizität mit einer räumlichen Periode hat, die mindestens ein Vielfaches der grössten Wellenlänge (ca. 800 nm) von sichtbarem Licht ist.

3. Pigment nach Anspruch 1 oder 2, **dadurch gekennzeichnet, dass** es eine plättchenartige Form hat und der mindestens eine Oberflächenbereich die gesamte Oberfläche auf einer der Plättchenseiten ist.

4. Pigment nach einem der Ansprüche 1 bis 3, **dadurch gekennzeichnet, dass** es eine sich über das gesamte Pigment erstreckende periodische diffraktive Struktur mit einer bestimmten räumlichen Frequenz und räumlichen Ausrichtung aufweist.

5. Pigment nach einem der Ansprüche 1 bis 3, **dadurch gekennzeichnet, dass** es verschiedene Bereiche mit jeweils unterschiedlicher periodischer diffraktiver Struktur aufweist.

6. Pigment nach Anspruch 5, **dadurch gekennzeichnet, dass** sich die verschiedenen Bereiche mit jeweils unterschiedlicher periodischer diffraktiver Struktur in der räumlichen Frequenz und/oder in der räumlichen Ausrichtung der periodischen Struktur des jeweiligen Bereichs unterscheiden.

7. Pigment nach einem der Ansprüche 1 bis 6, **dadurch gekennzeichnet, dass** es eine diffraktive Struktur für ultraviolettes Licht und eine diffraktive Struktur für sichtbares Licht aufweist.

8. Pigment nach einem der Ansprüche 1 bis 7, **dadurch gekennzeichnet, dass** es ein rotationssymmetrisches Beugungsgitter mit einer Schar konzentrischer kreisförmiger Beugungslinien aufweist.

9. Pigment nach einem der Ansprüche 1 bis 7, **dadurch gekennzeichnet, dass** es ein sternförmiges oder polygonförmiges Beugungsgitter mit einer Schar konzentrischer polygonartiger Beugungslinien aufweist.

10. Pigment nach einem der Ansprüche 1 bis 9, **dadurch gekennzeichnet, dass** es eine sich über das gesamte Pigment erstreckende periodische diffraktive Struktur aufweist, die eine Überlagerung verschiedener bestimmter räumlicher Frequenzen und räumlicher Ausrichtungen ist.

11. Pigment nach Anspruch 10, **dadurch gekennzeichnet, dass** es ein Ausschnitt aus einem Hologramm ist.

12. Pigment nach einem der Ansprüche 1 bis 11, **dadurch gekennzeichnet, dass** es aus einem optisch durchlässigen Material besteht, wobei die definierte diffraktive Struktur durch eine definierte räumliche Verteilung der Pigmentdicke und/oder des Brechungsindexes des Pigmentmaterials gegeben ist.

13. Pigment nach einem der Ansprüche 1 bis 11, **dadurch gekennzeichnet, dass** es ein optisch durchlässiges Material enthält, in dessen Innern eine reflektierende Schicht angeordnet ist.

14. Pigment nach einem der Ansprüche 1 bis 11, **dadurch gekennzeichnet, dass** die definierte diffraktive Struktur durch eine definierte räumliche Verteilung von Erhebungen und Vertiefungen einer reflektierenden Oberflächenschicht des Pigments gegeben ist.

15. Pigment nach einem der Ansprüche 1 bis 14, **dadurch gekennzeichnet, dass** es eine innere diffraktive Struktur aufweist, die von einem optisch durchlässigen Versiegelungsmaterial umgeben ist.

16. Pigment nach einem der Ansprüche 3 bis 15, **dadurch gekennzeichnet, dass** seine Abmessungen in der Plättchenebene im Bereich zwischen 5 µm und 200 µm und insbesondere im Bereich zwischen 10 µm und 30 µm liegen.

17. Pigment nach einem der Anspruch 16, **dadurch gekennzeichnet, dass** seine Dicke im Bereich zwischen 0,5 µm und 5 µm liegt.

18. Pigment nach Ansprüche 1 bis 17, **dadurch gekennzeichnet, dass** es aus mindestens zwei übereinander liegenden Schichten aufgebaut ist.

19. Pigment nach einem der Ansprüche 3 bis 17, **dadurch gekennzeichnet, dass** es auf beiden Plättchenflächen eine definierte diffraktive Oberflächenstruktur hat.

20. Pigment nach einem der Ansprüche 1 bis 19, **dadurch gekennzeichnet, dass** die Versiegelung aus einem hydrophoben Material besteht.

21. Pigment nach einem der Ansprüche 1 bis 19, **dadurch gekennzeichnet, dass** die Versiegelung aus einem hydrophoben Material besteht.

22. Pigment nach einem der Ansprüche 1 bis 19, **dadurch gekennzeichnet, dass** die Versiegelung auf der ersten Plättchenfläche aus einem hydrophoben Material und auf der zweiten Plättchenfläche aus einem hydrophilen Material besteht.

23. Verfahren zur Herstellung von Pigmenten gemäss einem der Ansprüche 1 bis 22, welches die folgenden Schritte aufweist:
a) Prägen einer definierten diffraktiven Struktur in/oder auf einem folienartigen Träger;
b) Beschichten der definierten diffraktiven Struktur auf dem Träger mit einem Versiegelungsmittel durch Epitaxie;
c) Vermahlen des in Schritt a) und b) bearbeiteten folienartigen Trägers zu Pigmentpartikeln.

24. Verfahren nach Anspruch 23, **dadurch gekennzeichnet, dass** der Schritt a) durch Heissprägen, Thixoprägen oder Reaktivprägen erfolgt.

25. Verfahren nach Anspruch 23, **dadurch gekennzeichnet, dass** der Schritt a) durch Lithographie, insbesondere durch Elektronenstrahl- oder optische Lithographie erfolgt.

26. Verfahren nach Anspruch 23, **dadurch gekennzeichnet, dass** der Schritt a) auch durch Ritzen der Oberfläche des Trägers erfolgt.

27. Verfahren nach einem der Ansprüche 23 bis 26, **dadurch gekennzeichnet, dass** in Schritt b) die diffraktive Struktur mit einer reflektierenden Schicht belegt wird.

28. Verfahren nach einem der Ansprüche 23 bis 27, **dadurch gekennzeichnet, dass** der Schritt b) durch Gasphasen- oder Flüssigphasen-Epitaxie, erfolgt.

29. Verfahren nach einem der Ansprüche 23 bis 27, **dadurch gekennzeichnet, dass** der Schritt b) durch Bedampfen, insbesondere mit einem Metalldampf, erfolgt.

30. Verfahren nach einem der Ansprüche 23 bis 29, **dadurch gekennzeichnet, dass** der Schritt c) auch ein Zerschnipseln des folienartigen Trägers aufweist.

31. Verfahren nach einem der Ansprüche 23 bis 29, **dadurch gekennzeichnet, dass** der in Schritt a) verwendete folienartige Träger eine relativ elastische Basisschicht als erste Schicht aufweist, auf der eine relativ spröde zweite Schicht aufgebracht ist, in und/oder auf der die definierte diffraktive Struktur geprägt wird, und dass der Schritt c) auch ein Abkanten des folienartigen Trägers aufweist.

32. Verfahren nach Anspruch 23 bis 31, **dadurch gekennzeichnet, dass** das in Schritt b) verwendete Versiegelungsmaterial ein sprödes, insbesondere lackartiges oder harzartiges Material ist.

33. Verfahren nach Anspruch 23 bis 32, **dadurch gekennzeichnet, dass** die Vermahlung in Schritt c) durch Nassvermahlung erfolgt.

34. Pigmentpulver, das Pigmente gemäss einem der Ansprüche 1 bis 22 aufweist, die gemäss dem Verfahren nach einem der Ansprüche 23 bis 33 hergestellt wurden.

35. Pigmentpulver nach Anspruch 34, **dadurch gekennzeichnet, dass** die Pigmente mit einem Hilfsmittel beschichtet sind.

36. Pigmentpulver nach Anspruch 35, **dadurch gekennzeichnet, dass** das Hilfsmittel ein Benetzungsmittel ist.

37. Druckfarbe, die ein Pigmentpulver gemäss einem der Ansprüche 34 bis 36 enthält.

38. Lack, der ein Pigmentpulver gemäss einem der Ansprüche 34 bis 36 enthält.

39. Transparenter Kunststoff, insbesondere PET, PEN, PBT, PA, PC, der ein Pigmentpulver gemäss einem der Ansprüche 34 bis 36 enthält.

40. Dokument, das zu seiner Authentisierung mindestens eines der folgenden Merkmale aufweist:
➢ einen aufgedruckten Aufdruck aus Druckfarbe gemäss Anspruch 37
➢ ein Etikett aus einem transparenten Kunststoff gemäss Anspruch 39.

## Claims

1. A pigment with at least one surface area, the smallest dimension of which is a multiple of the largest wavelength (approx. 400 nm) of ultraviolet light, wherein the pigment on the at least one surface area has a defined diffractive structure, which has a spatial periodicity with a spatial period that measures at least a multiple of the highest wavelength (approx. 400 nm) of ultraviolet light, **characterized in that** the pigment has an inner diffractive structure, which is enveloped by an epitaxially applied, optical, permeable sealing material.

2. The pigment according to claim 1, **characterized in that** the smallest dimension of the surface area is at least a multiple of the highest wavelength (approx. 800 nm) of visible light, and the pigment has at least one defined diffractive structure on the at least one surface area, which has a spatial periodicity with a spatial period that measures at least a multiple of the highest wavelength (approx. 800 nm) of visible light.

3. The pigment according to claim 1 or 2, **characterized in that** it has a plate-like shape, and the at least one surface area of the entire surface is on one of the plate sides.

4. The pigment according to one of claims 1 to 3, **characterized in that** it has a periodic diffractive structure with a specific spatial frequency and spatial orientation that extends over the entire pigment.

5. The pigment according to one of claims 1 to 3, **characterized in that** it has different areas with a respectively varying periodic diffractive structure.

6. The pigment according to claim 5, **characterized in that** the different areas with a respectively varying periodic diffractive structure differ in terms of the spatial frequency and/or spatial alignment of the periodic structure of the respective area.

7. The pigment according to one of claims 1 to 6, **characterized in that** it has a diffractive structure for ultraviolet light and a diffractive structure for visible light.

8. The pigment according to one of claims 1 to 7, **characterized in that** it has a rotationally symmetrical diffraction grating with a family of concentric, circular diffraction lines.

9. The pigment according to one of claims 1 to 7, **characterized in that** it is a star-shaped or polygonal diffraction grating with a family of concentric, polygonal diffraction lines.

10. The pigment according to one of claims 1 to 9, **characterized in that** it has a periodic diffractive structure extending over the entire pigment, and consists of varying, specific overlapping spatial frequencies and spatial orientations.

11. The pigment according to claim 10, **characterized in that** it is a section of a hologram.

12. The pigment according to one of claims 1 to 11, **characterized in that** it consists of an optically permeable material, wherein the defined diffractive structure is provided by a defined spatial distribution of the pigment thickness and/or the refraction index of the pigment material.

13. The pigment according to one of claims 1 to 11, **characterized in that** it contains an optically permeable material that incorporates a reflecting layer.

14. The pigment according to one of claims 1 to 11, **characterized in that** the defined diffractive structure is provided by a defined spatial distribution of elevations and depressions of a reflecting surface layer of the pigment.

15. The pigment according to one of claims 1 to 14, **characterized in that** it has an inner diffractive structure that is enveloped by an optically permeable sealing material.

16. The pigment according to one of claims 3 to 15, **characterized in that** its dimensions in the plate plane range between 5 µm and 200 µm, in particular lying between 10 µm and 30 µm.

17. The pigment according to one of claim 16, **characterized in that** its thickness ranges between 0.5 µm and 5 µm.

18. The pigment according to claims 1 to 17, **characterized in that** it consists of at least two layers lying one atop the other.

19. The pigment according to one of claims 3 to 17, **characterized in that** it has a defined diffractive surface structure on both plate surfaces.

20. The pigment according to one of claims 1 to 19, **characterized in that** the seal consists of a hydrophobic material.

21. The pigment according to one of claims 1 to 19, **characterized in that** the seal consists of a hydrophilic material.

22. The pigment according to one of claims 1 to 19, **characterized in that** the seal consists of a hydrophobic material on the first plate surface, and of a hydrophilic material on the second plate surface.

23. A method for manufacturing pigments according to one of claims 1 to 22, having the following steps:
a) Stamping a defined diffractive structure in/or on a film carrier;
b) Coating the defined diffractive structure onto the carrier with a sealant via epitaxy;
c) Milling the film carrier processed in step a) and b) into pigment particles.

24. The method according to claim 23, **characterized in that** step a) involves hot-stamping, thixo-stamping or reactive stamping.

25. The method according to claim 23, **characterized in that** step a) involves lithography, in particular electron beam or optical lithography.

26. The method according to claim 23, **characterized in that** step a) also involves scratching the carrier surface.

27. The method according to one of claims 23 to 26, **characterized in that** step b) involves coating the diffractive structure with a reflecting layer.

28. The method according to one of claims 23 to 27, **characterized in that** step b) involves gas phase or liquid phase epitaxy.

29. The method according to one of claims 23 to 27, **characterized in that** step b) involves vapor deposition, in particular with metal vapor.

30. The method according to one of claims 23 to 29, **characterized in that** step c) also involves a chipping of the film carrier into small pieces.

31. The method according to one of claims 23 to 29, **characterized in that** the film carrier used in step a) has a relatively elastic base layer as the first layer, on which a relatively brittle second layer is applied, in and/or on which the defined diffractive structure is stamped, and that step c) also involves beveling the film carrier.

32. The method according to claim 23 to 31, **characterized in that** the sealing material used in step b) is a brittle, in particular lacquer or resin-like material.

33. The method according to claim 23 to 32, **characterized in that** milling takes place in step c) via wet milling.

34. A pigment powder having pigments according to one of claims 1 to 22, which are manufactured using the method according to one of claims 23 to 33.

35. The pigment powder according to claim 34, **characterized in that** the pigments are coated with an aid.

36. The pigment powder according to claim 35, **characterized in that** the aid is a wetting agent.

37. A printing ink containing a pigment powder according to one of claims 34 to 36.

38. A lacquer containing a pigment powder according to one of claims 34 to 36.

39. A transparent plastic, in particular PET, PEN, PBT, PA, PC, which contains a pigment powder according to one of claims 34 to 36.

40. A document that has at least one of the following features for its authentication:
• An imprint consisting of printing ink according to claim 37;
• A label consisting of a transparent plastic according to claim 39.

## Revendications

1. Pigment, avec au moins une zone superficielle dont la plus petite dimension est au moins un multiple de la plus grande longueur d'ondes (environ 400 nm) de la lumière ultraviolette, le pigment présentant au moins sur une zone superficielle une structure de diffraction définie, qui a une périodicité spatiale avec une période spatiale qui est au moins un multiple de la plus grande longueur d'ondes (environ 400 nm) de la lumière ultraviolette, **caractérisé en ce que** le pigment a une structure de diffraction interne qui est entourée d'une matière de métallisation optiquement transparente, appliquée de façon épitaxiale.

2. Pigment, selon la revendication 1, **caractérisé en ce que** la plus petite dimension de la zone superficielle est au moins un multiple de la plus grande longueur d'ondes (environ 800 nm) de la lumière visible et **en ce que** sur au moins la zone superficielle, le pigment présente au moins une structure de diffraction définie, qui a une périodicité spatiale avec une période spatiale qui est au moins un multiple de la plus grande longueur d'ondes (env. 800 nm) de la lumière visible.

3. Pigment selon la revendication 1 ou 2, **caractérisé en ce qu'**il présente la forme d'une paillette et **en ce qu'**au moins la zone superficielle est la surface totale sur au moins l'une des faces de la paillette.

4. Pigment selon l'une quelconque des revendications 1 à 3, **caractérisé en ce qu'**il présente une structure à diffraction périodique s'étendant sur l'ensemble du pigment, avec une fréquence spatiale et orientation spatiale déterminées.

5. Pigment selon l'une quelconque des revendications 1 à 3, **caractérisé en ce qu'**il comporte différentes zones à structure de diffraction périodique chaque fois différente.

6. Pigment selon la revendication 5, **caractérisé en ce que** les différentes zones avec une structure de diffraction périodique chaque fois différente se différencient par la fréquence spatiale et/ou par l'orientation spatiale de la structure périodique de la zone respective.

7. Pigment selon l'une quelconque des revendications 1 à 6, **caractérisé en ce qu'**il présente une structure de diffraction pour la lumière ultraviolette et une structure de diffraction pour la lumière visible.

8. Pigment selon l'une quelconque des revendications 1 à 7, **caractérisé en ce qu'**il présente un réseau de diffraction symétrique en rotation avec un assemblage de lignes de diffraction concentriques circulaires.

9. Pigment selon l'une quelconque des revendications 1 à 7, **caractérisé en ce que** qu'il présente un réseau de diffraction en étoile, avec un assemblage de lignes de diffraction concentriques polygonales.

10. Pigment selon l'une quelconque des revendications 1 à 9, **caractérisé en ce qu'**il comporte une structure de diffraction périodique s'étendant sur l'ensemble du pigment, qui est une superposition de différentes fréquences spatiales et orientations spatiales déterminées.

11. Pigment selon la revendication 10, **caractérisé en ce qu'**il s'agit d'un extrait d'un hologramme.

12. Pigment selon l'une quelconque des revendications 1 à 11, **caractérisé en ce qu'**il est en un matériau optiquement transparent, la structure de diffraction définie étant donnée par une répartition spatiale définie de l'épaisseur des pigments et/ou de l'indice de réfraction du matériau du pigment.

13. Pigment selon l'une quelconque des revendications 1 à 11, **caractérisé en ce qu'**il contient un matériau optiquement transparent, à l'intérieur duquel est disposée une couche réfléchissante.

14. Pigment selon l'une quelconque des revendications 1 à 11, **caractérisé en ce que** la structure de diffraction définie est donnée par une répartition spatiale définie de bosses et de creux d'une couche superficielle réfléchissante du pigment.

15. Pigment selon l'une quelconque des revendications 1 à 14, **caractérisé en ce qu'**il présente une structure de diffraction interne qui est entourée par un matériau de métallisation optiquement transparent.

16. Pigment selon l'une quelconque des revendications 3 à 15, **caractérisé en ce que** ses dimensions dans le plan des paillettes se situent dans la fourchette entre 5 µm et 200 µm et notamment dans la fourchette entre 10 µm et 30 µm.

17. Pigment selon la revendication 16, **caractérisé en ce que** son épaisseur se situe dans la fourchette entre 0,5 µm et 5 µm.

18. Pigment selon les revendications 1 à 17, **caractérisé en ce qu'**il est conçu en au moins deux couches superposées.

19. Pigment selon l'une quelconque des revendications 3 à 17, **caractérisé que** sur les deux surfaces de paillettes, il y a une structure superficielle de diffraction définie.

20. Pigment selon l'une quelconque des revendications 1 à 19, **caractérisé en ce que** la métallisation est en un matériau hydrophobe.

21. Pigment selon l'une quelconque des revendications 1 à 19, **caractérisé en ce que** la métallisation est en un matériau hydrophile.

22. Pigment selon l'une quelconque des revendications 1 à 19, **caractérisé en ce que** sur la première surface de paillette, la métallisation est en un matériau hydrophobe et sur la deuxième surface de paillette, elle est en un matériau hydrophile.

23. Procédé de fabrication de pigments selon l'une quelconque des revendications 1 à 22, présentant les étapes suivantes :
a) Estampage d'une structure de diffraction définie dans/ou sur un support du type d'un film
b) Revêtement de la structure de diffraction définie sur le support d'un produit de métallisation par épitaxie ;
c) Pulvérisation du support du type d'un film traité à l'étape a) et b) en particules de pigments.

24. Procédé selon la revendication 23, **caractérisé en ce que** l'étape a) consiste en un estampage à chaud, en un thixo-estampage ou en un estampage par réactif.

25. Procédé selon la revendication 23, **caractérisé en ce que** l'étape a) consiste en une lithographie, notamment en une lithographie par faisceau électronique ou en une lithographie optique.

26. Procédé selon la revendication 23, **caractérisé en ce que** l'étape a) consiste également en des incisions de la surface du support.

27. Procédé selon l'une quelconque des revendications 23 à 26, **caractérisé en ce qu'**à l'étape b) on recouvre la structure de diffraction d'une couche réfléchissante.

28. Procédé selon l'une quelconque des revendications 23 à 27, **caractérisé en ce que** l'étape b) consiste en une épitaxie par phase gazeuse ou par phase liquide.

29. Procédé selon l'une quelconque des revendications 23 à 27, **caractérisé en ce que** l'étape b) consiste en une vaporisation, notamment d'une vapeur métallique.

30. Procédé selon l'une quelconque des revendications 23 à 29, **caractérisé en ce que** l'étape c) présente également un découpage du support du type d'un film.

31. Procédé selon l'une quelconque des revendications 23 à 29, **caractérisé en ce que** le support du type d'un film utilisé à l'étape a) présente en tant que première couche une couche de base relativement élastique sur laquelle est appliquée une deuxième couche relativement cassante et/ou sur laquelle on estampe la structure de diffraction définie, et **en ce que** l'étape c) présente également un chanfreinage du support du type d'un film.

32. Procédé selon la revendication 23 à 31, **caractérisé en ce que** le matériau de métallisation utilisé à l'étape b) est un matériau cassant, notamment un matériau du type d'une peinture ou d'une résine.

33. Procédé selon la revendication 23 à 32, **caractérisé en ce que** la pulvérisation à l'étape c) consiste en une pulvérisation humide.

34. Poudre de pigments, présentant des pigments selon l'une quelconque des revendications 1 à 22 qui ont été fabriqués d'après le procédé selon l'une quelconque des revendications 23 à 33.

35. Poudre de pigments selon la revendication 34, **caractérisée en ce que** les pigments sont revêtus d'un agent auxiliaire.

36. Poudre de pigments selon la revendication 35, **caractérisée en ce que** l'agent auxiliaire est un agent mouillant.

37. Encre d'imprimerie contenant une poudre de pigments selon l'une quelconque des revendications 34 à 36.

38. Peinture, contenant une poudre de pigments selon l'une quelconque des revendications 34 à 36.

39. Matière plastique transparente, notamment PET, PEN, PBT, PA, PC, contenant une poudre de pigments selon l'une quelconque des revendications 34 à 36.

40. Document, qui pour son authentification présente au moins l'un des attributs suivants :
➢ une surimpression imprimée en encre d'imprimerie selon la revendication 37;
➢ une étiquette en une matière plastique selon la revendication 39.
